# EUROPEAN PATENT SPECIFICATION

(11) **EP 3 292 455 B1**
(45) Date of publication and mention of the grant of the patent: **13.10.2021**
(21) Application number: 16723886.4
(22) Date of filing: 04.05.2016
(51) Int. Cl.: G05D 23/19

(54) **USER CONTROL DEVICE WITH CASE CONTAINING CIRCUIT BOARD EXTENDING INTO MOUNTING LOCATION**
BENUTZERSTEUERUNGSVORRICHTUNG MIT GEHÄUSE MIT EINER IN DIE MONTAGEPOSITION REICHENDEN LEITERPLATTE
DISPOSITIF DE COMMANDE UTILISATEUR AVEC BOÎTIER CONTENANT CARTE DE CIRCUIT IMPRIMÉ S'ÉTENDANT DANS UN EMPLACEMENT DE MONTAGE

(30) Priority: 04.05.2015 US 201562156868 P; 28.10.2015 US 201562247672 P; 25.11.2015 US 201562260141 P; 04.01.2016 US 201662274750 P; 05.01.2016 US 201662275199 P; 05.01.2016 US 201662275202 P; 05.01.2016 US 201662275204 P; 06.01.2016 US 201662275711 P
(43) Date of publication of application: 14.03.2018
(73) Proprietor: Johnson Controls Tyco IP Holdings LLP, Milwaukee, WI 53209 (US)
(72) Inventor: RIBBICH, Joseph R., Waukesha, Wisconsin 53189 (US); RIBBICH, Michael L., Oconomowoc, Wisconsin 53066 (US); CIPOLLA, John P., Inveness, Illinois 60067 (US); SINHA, Sudhi, Milwaukee, Wisconsin 53202 (US); VERMA, Amit, Sunrise, Florida 33323 (US); DIPTEE, Vinosh C., Boynton Beach, Florida 33426 (US); NGUYEN, Hao A., Lakr Worth, Florida 33467 (US); ABDALA, Julio A., Southwest Ranches, Florida 33331 (US); ALVAREZ, Juan Guillermo, Weston, Florida 33331 (US); BICUDO, Felippe M., Fort Lauderdale, Florida 33304 (US); DOUGLASS, Patricia Ellis, Pompano Beach, Florida 33062 (US); RIBEIRO, Claudio Santiago, Evanston, Illinois 60202 (US)
(74) Representative: Trinks, Ole
(86) International application number: PCT/US2016/030835
(87) International publication number: WO 2016/179320

(56) References cited:
- WO-A2-2012/042232
- US-A1- 2001 015 281
- US-A1- 2015 001 361
- US-B2- 8 802 981

## Description

### BACKGROUND

The present disclosure relates generally to user control devices and more particularly to thermostats for controlling a building or space's heating, ventilating, and air conditioning (HVAC) system.

A thermostat is, in general, a component of an HVAC control system. Traditional thermostats sense the temperature or other parameters (e.g., humidity) of a system and control components of the HVAC system in order to maintain a set point for the temperature or other parameter. A thermostat may be designed to control a heating or cooling system or an air conditioner. Thermostats are manufactured in many ways, and use a variety of sensors to measure temperature and other desired parameters of a system.

Conventional thermostats are configured for one-way communication to connected components, and to control HVAC systems by turning on or off certain components or by regulating flow. Each thermostat may include a temperature sensor and a user interface. The user interface typically includes display for presenting information to a user and one or more user interface elements for receiving input from a user. To control the temperature of a building or space, a user adjusts the set point via the thermostat's user interface. Prior art can be found in US 8 802 981 B2. However, such thermostat has the drawback that the display is mounted in a part of the wall, which is not visible anymore.

### SUMMARY

The invention is provided by a thermostat according to the combination of features of any one of the independent claims.

### BRIEF DESCRIPTION OF THE DRAWINGS

FIG. 1 is a front perspective view from above of a thermostat according to an exemplary embodiment.
FIG. 2 is a rear perspective view from below of the thermostat of FIG. 1.
FIG. 3 is a front view of the thermostat of FIG. 1.
FIG. 3A is a section view the thermostat of FIG. 3 along line 3A-3A.
FIG. 4 is a top view of the thermostat of FIG. 1.
FIG. 5 is a bottom view of the thermostat of FIG. 1.
FIG. 6 is a side view of the thermostat of FIG. 1.
FIG. 7 is a rear view of the thermostat of FIG. 1.
FIG. 8 is an exploded view of the thermostat of FIG. 1.
FIG. 8A is a rear perspective view of the housing of the thermostat of FIG. 1.
FIG. 8B is an exploded view of a portion of the thermostat of FIG. 1.
FIG. 9 is a front perspective view of a portion of the thermostat of FIG. 1.
FIG. 10 is a front view of the portion of the thermostat of FIG. 9.
FIG. 11 is a section view of the portion of the thermostat of FIG. 10 along line 11-11.
FIG. 12 is a section view of the portion of the thermostat of FIG. 10 along line 12-12.
FIG. 13 is a side view of the thermostat of FIG. 1 attached to a wall.
FIG. 14 is a front view perspective view from above of a thermostat according to an exemplary embodiment.
FIG. 15 is a front view of the thermostat of FIG. 14 with a front cover removed.
FIG. 16 is a side view of the thermostat of FIG. 14 attached to a wall.

### DETAILED DESCRIPTION

Referring generally to the Figures, a multi-function user control device is shown, according to various exemplary embodiments. The user control device may be implanted as a thermostat to control a HVAC system. The user control device may be implemented as a smart hub and may be connected to any of a variety of controllable systems and devices. For example, the user control device may be connected to a home automation system, a building automation system, an HVAC system, a lighting system, a security system, an electrical system, a sprinkler system, a home entertainment system, and/or any other type of system that can be monitored or controlled via a user control device. The user control device may be implemented in any of a variety of environments (e.g., a home, a building, a classroom, a hotel, a healthcare facility, a vehicle, etc.) and used to monitor, control, and/or facilitate user interaction with controllable systems or devices in such environments. For example, the user control device may be a thermostat installed in a home or building (e.g., mounted on a wall).

The user control device includes a housing that contains electronic components and a touch-sensitive display for displaying visual media (e.g., information, text, graphics, etc.) to a user and receiving user inputs. The housing is selectively attached to a mounting plate to mount the user control device to a mounting surface such as a wall. The housing includes a display mount or support plate that supports the touch-sensitive display. The display mount is cantilevered vertically from the base of the housing such that the entire touch-sensitive display and the display mount are spaced a distance away from the wall when the user control device is attached to a wall. The touch-sensitive display, the display mount, and a protective cover for the display are not opaque (e.g., transparent or translucent), which minimizes the visible footprint of the user control device to a user relative to conventional opaque user control devices. The housing may also include one or more light sources. The light sources may be configured to emit light toward the wall, thereby creating lighting effects on the wall. The light sources may also emit light in alternative or additional directions.

The user control device can be equipped with one or more of a variety of sensors (e.g., temperature, humidity, air quality, proximity, light, vibration, motion, optical, audio, occupancy, power, security, etc.) configured to sense a variable state or condition of the environment in which the user control device is installed. The user control device may include a variety of user interface devices (e.g., a touch-sensitive panel, an electronic display, speakers, haptic feedback, microphone, ambient lighting, etc.) configured to facilitate user interaction with the user control device. The user control device may include a data communications interface configured to facilitate communications between the user control device and remote sensor units, a building automation system, a home automation system, HVAC equipment, mobile devices (e.g., via WiFi, Bluetooth, NFC, LTE, LAA LTE, etc.), a communications network (e.g., a LAN, WAN, 802.11, the Internet, a cellular network, etc.), and/or any other systems or devices to which the user control device may be connected.

The user control device may be configured to function as a connected smart hub. For example, the user control device may be configured to receive voice commands from a user and control connected equipment in response to the voice commands. The user control device may be configured to connect to mobile devices (e.g., a user's phone, tablet, laptop, etc.) or other networked devices (e.g., a desktop computer) to allow remote monitoring and control of connected systems. The user control device may be configured to detect the occupancy of a room or space in which the user control device is installed and may perform a variety of occupancy-based control processes. The user control device may monitor the performance of connected equipment (e.g., HVAC equipment) and may perform diagnostics based on data received from the HVAC equipment.

The user control device may function as a wireless communications hub (e.g., a wireless router, an access point, etc.) and may be configured to bridge communications between various systems and devices. For example, the user control device may include a cellular communications transceiver, a modem, an Ethernet transceiver, or other communications hardware configured to communicate with an external communications network (e.g., a cellular network, a WAN, the Internet, etc.). The user control device may include a WiFi transceiver configured to communicate with nearby mobile devices. The user control device may be configured to bridge communications between mobile devices and external communications networks. This functionality allows the user control device to replace networking equipment (e.g., a modem, a wireless router, etc.) in building or vehicle and to provide Internet connectivity. For example, the user control device may function as a WiFi hotspot or a micro cell within a building or vehicle and may communicate with the Internet via an integrated Ethernet transceiver, a cellular transceiver (e.g., for locations not serviced by an Internet service provider), a coaxial cable, or other data communications hardware.

The user control device may receive weather forecasts from a weather service and severe weather alerts. The user control device may have ambient lighting components that emit specific light colors or patterns to indicate sever weather alerts or other alerts. The user control device may also receive utility rate information from a utility provider. The user control device may use the weather forecasts in conjunction with the utility rate information to optimize (e.g., minimize) the energy consumption of the home or building. In some embodiments, the user control device generates a utility bill forecast and recommends set point modifications to reduce energy consumption or energy cost. In some embodiments, the user control device receives energy consumption information for other homes/buildings from a remote system and compares the energy consumption of connected HVAC equipment to the energy consumption of the other homes/buildings.

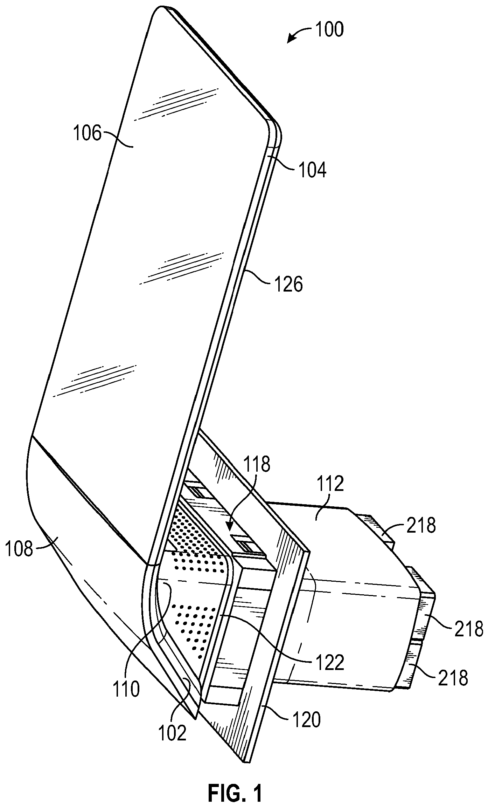

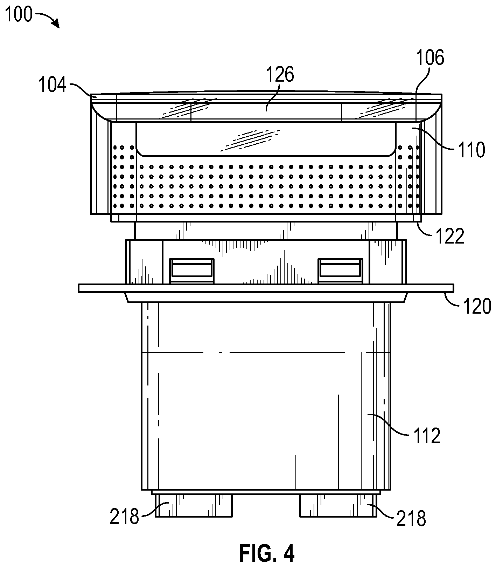

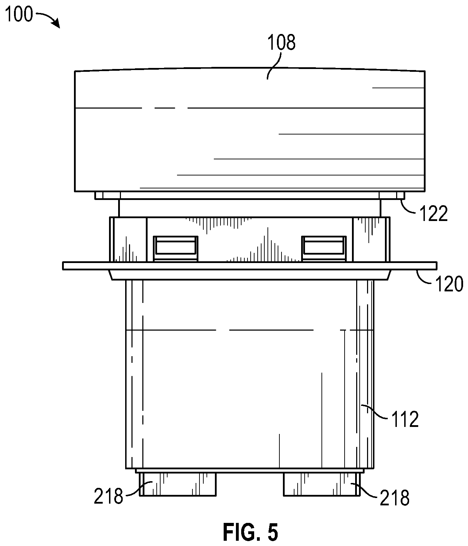

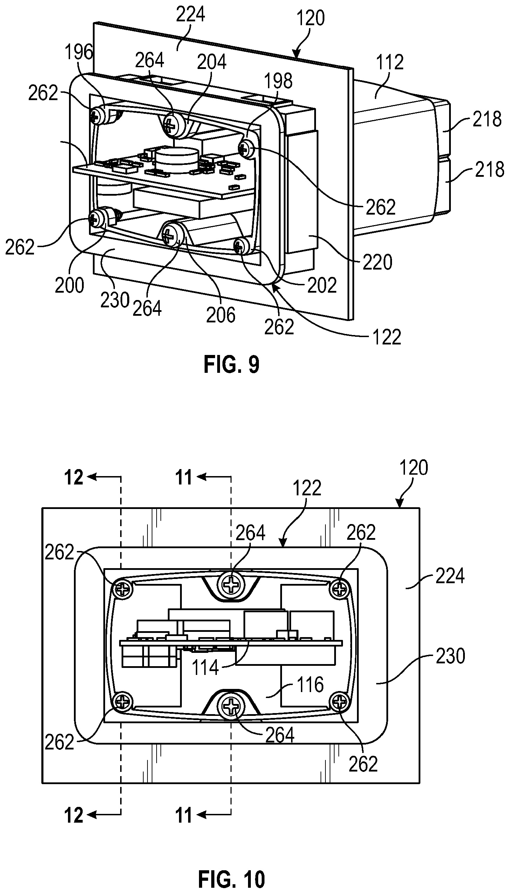

Figures 1-13 illustrate a multi-function user control device or thermostat 100, according to an exemplary embodiment. The thermostat 100 is configured to be mounted on a wall (e.g., a vertical wall within a dwelling, home, building, etc.) or other suitable mounting location (e.g., a ledge, a control panel, or other surface of an object within a building space, furniture, a dashboard, a vehicle seat, or other vehicle surface, etc.).

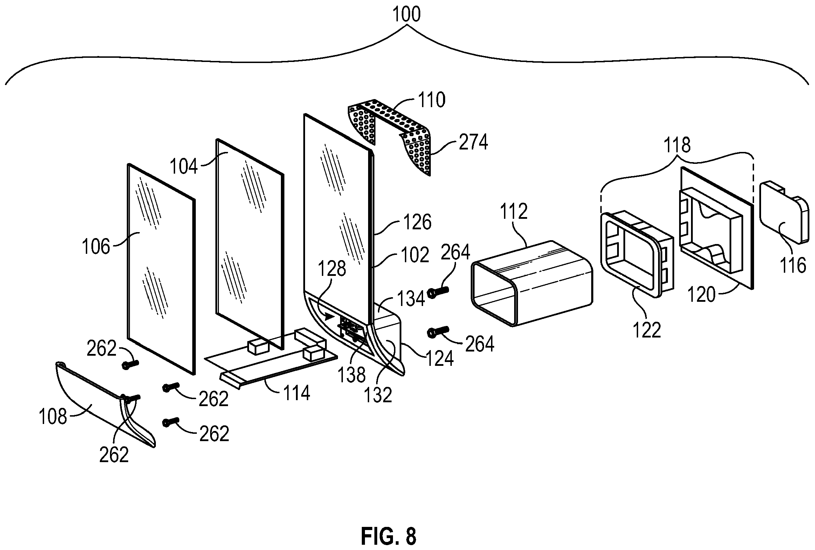

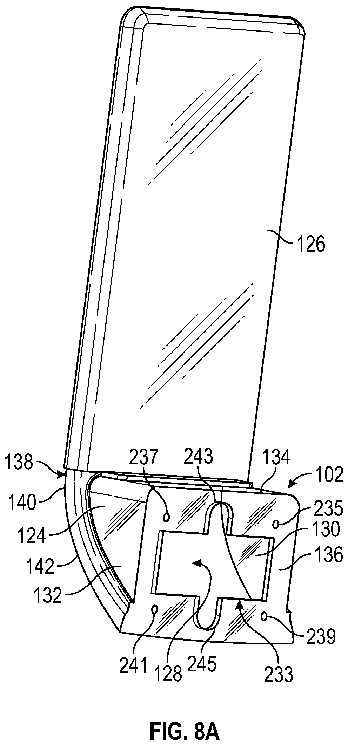

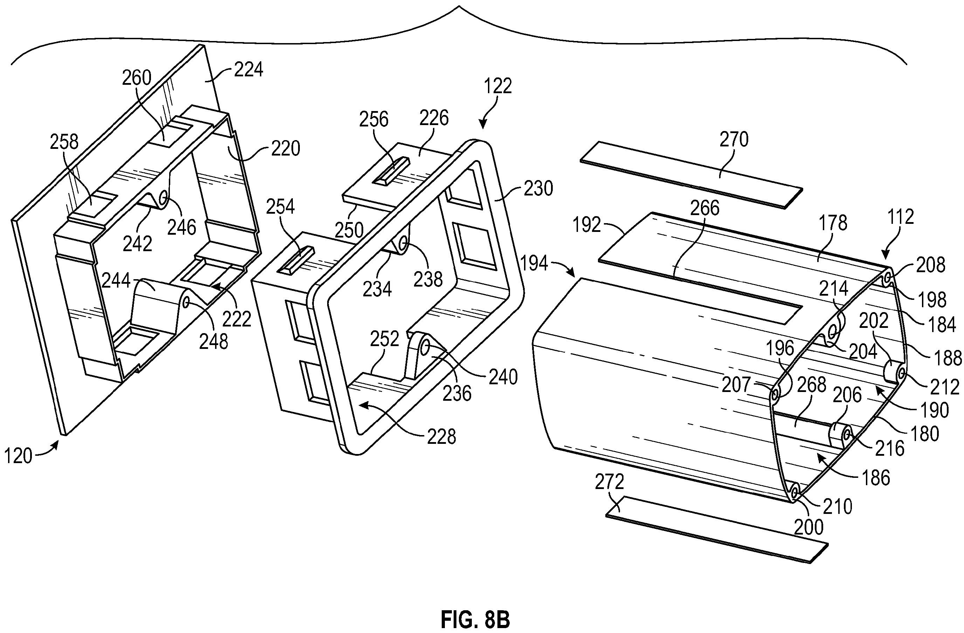

As shown in FIG. 8, the thermostat 100 includes a housing 102, a touch-sensitive display 104, a protective cover 106 for the display 104, a face plate or front cover 108, a molding or top cover 110 that covers a portion of the housing 102, a sleeve or case 112 for housing one or more circuit boards or other electronic components, shown as circuit board 114, an end plate or cover 116, and a mounting bracket 118 including a first or interior bracket or frame 120 and a second or exterior bracket or frame 122. The assembled components of the thermostat 100 other than the mounting bracket 118 and any fastener or other components used to fasten the mounting bracket 118 to the mounting location are referred to as the "thermostat body."

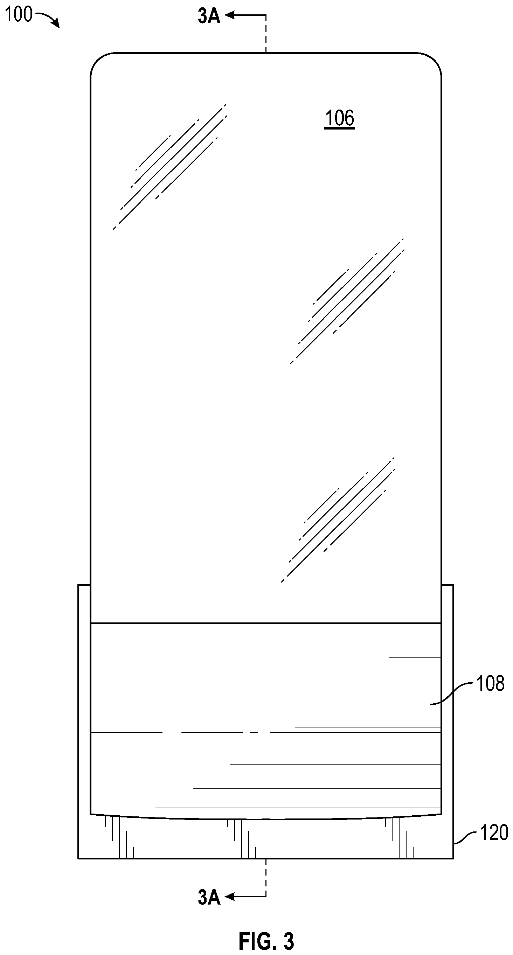

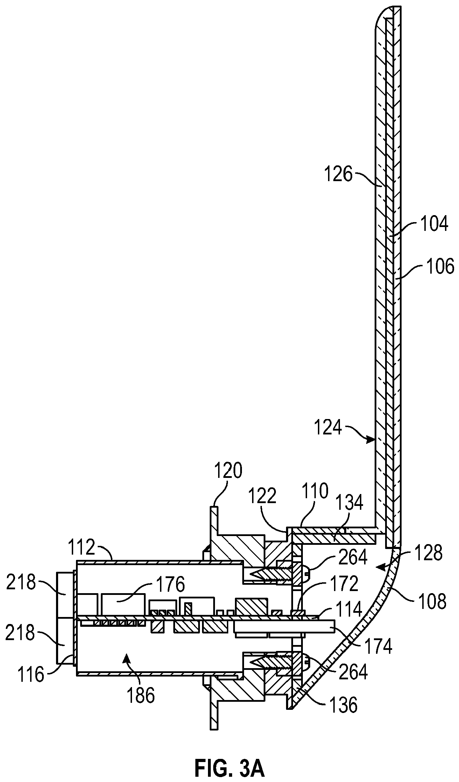

As shown in FIGS. 3A, 8, and 8A, the housing 102 includes a main portion or base 124 and a cantilevered plate or display mount 126 extending from the front of the base 124. The base 124 defines a pocket or volume 128 that the circuit board 114 may be partially located within. The volume 128 is defined by two side walls 130 and 132, a top wall 134, and a rear wall 136. The two side walls 130 and 132 and the top wall 134 extend outward from the rear wall 136, with the top wall 134 connecting the two side walls 130 and 132. The two side walls 130 and 132 both include a front end 138 that includes a vertical segment 140 and a curved or angled segment 142 that angles downward from the vertical segment 140 at an angel of about 45 degrees. In other embodiments, the angle is greater or smaller (e.g., between 30 degrees and 60 degrees. In other embodiments, the front end 138 of the side walls 130 and 132 are curved. In other embodiments, the base 124 includes a front wall and a bottom wall that connect to the two side walls 130 and 132 and the top wall 134 (e.g., resulting in a housing that is rectangular in cross-section).

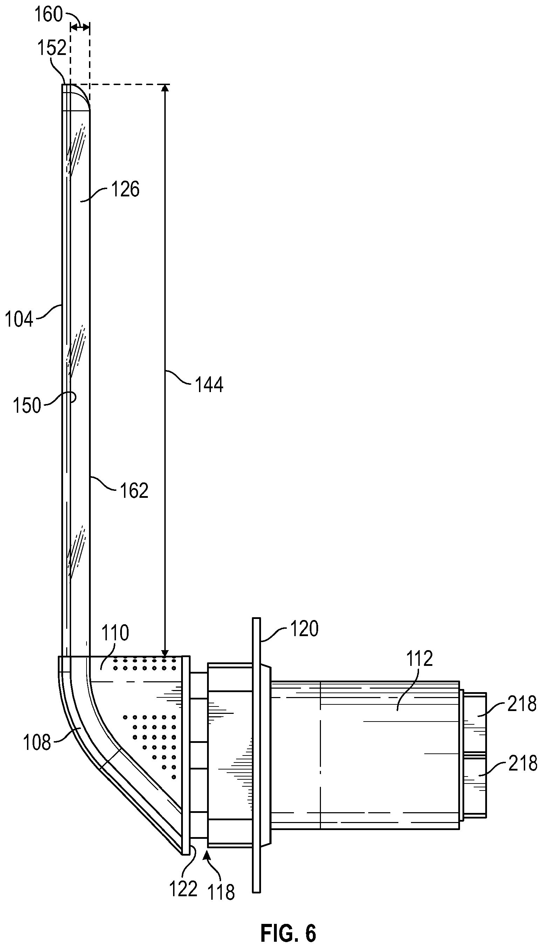

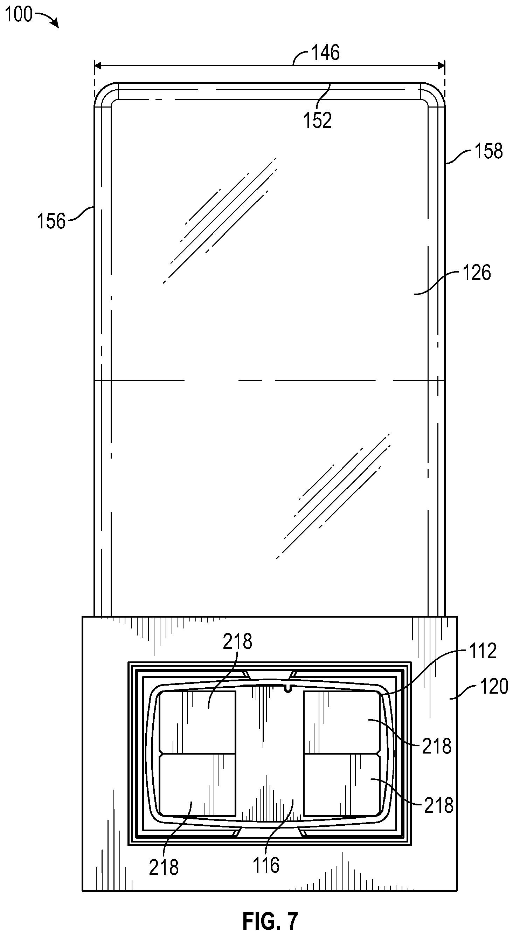

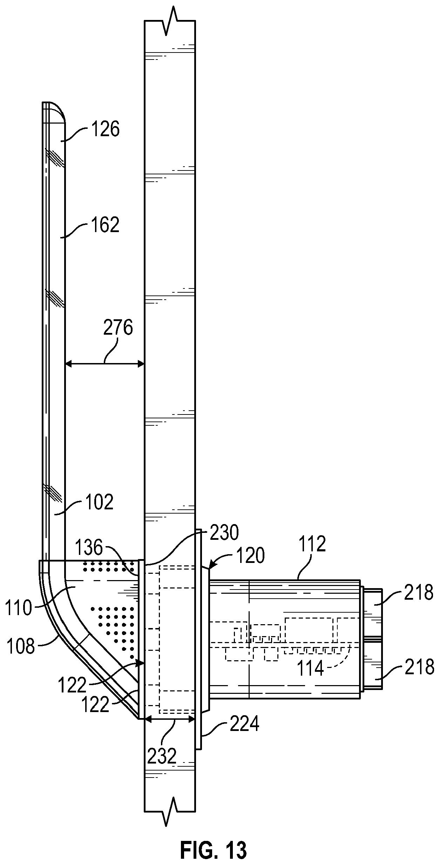

As shown in FIGS. 6 and 13, the housing 102 includes a display mount 126 (back plate, mounting plate) that extends past the top wall 134 of the base 124. The display mount 126 is cantilevered from the base 124. The display mount 126 provides a mounting surface 150 for attaching the display 104 to the housing 102. The display mount 126 has a height 144 (measured from the top surface of the top wall 134 to a top or free end 152, a width 146 measured from a first or left side 156 to a second or right side 158 (FIG. 7), and a thickness 160 measured from the front or mounting surface 150 to a rear or back surface 162.

As illustrated, the display mount 126 extends upwardly in a cantilevered fashion from the base 124 so that the display mount 126 is located above the base 124 in the normal operating position of the thermostat 100. In alternative embodiments, the display mount extends downwardly in a cantilevered fashion from the base so that the display mount is located below the base in the normal operating position of the thermostat. In alternative embodiments, the display mount extends sideways in a cantilevered fashion from the base so that the display mount is located even with and to one side of the base in the normal operating position of the thermostat.

The display mount 126 may be configured as a portrait display with the width 146 less than the height 144 (as shown in FIGS. 1-13), a landscape display with the width 146 greater than the height 144, or as a square display with the width 146 equal to the height 144. The top surface of the top wall 134 and the top end 152 of the display mount 126 are parallel to one another. The left side 156 and the right side 158 are parallel to one another. The mounting surface 150 and the back surface 162 are parallel to one another. The top end 152 is perpendicular to the left side 156 and the right side 158. In some embodiments, the display mount 126 is arranged with the four sides not arranged in a rectangle or square (e.g., a parallelogram, a rhombus, a trapezoid, etc.) in shapes with more or fewer than four sides (e.g., a triangle, a pentagon, a hexagon, etc.), as a circle, as an oval or ellipse, or other shape suitable for mounting a display.

As shown in FIG. 8A, the rear wall 136 of the base 124 of the housing 102 is arranged vertically and is planar. The back surface 162 of the display mount 126 is spaced apart from the rear wall 136 by a horizontal distance. As illustrated, the horizontal distance is constant over the height 144 of the display mount 126 so that the back surface 162 of the display mount 126 is parallel to rear wall 136. The mounting surface 150 of the display mount 126 is perpendicular to the top surface of the top wall 134. The back surface 162 of the display mount 126 is perpendicular to the top surface of the top wall 134. In other embodiments the horizontal distance may decrease from the top wall 134 of the base to the top end 152 of the display mount 126 so that the display mount 126 angles toward the wall. In other embodiments the horizontal distance may increase from the top wall 134 of the base to the top end 152 of the display mount 126 so that the display mount 126 angles away from the wall. As illustrated, the display mount 126 is positioned at the front of the base 124. In other embodiments, the display mount 126 is positioned between the front of the base 124 and the rear wall 136 of the base 124, but is spaced apart from the rear wall 136 by the horizontal distance (i.e., the back surface 162 of the display mount 126 is not coplanar with the rear wall 136 of the base 124).

As shown in FIG. 6, the touch-sensitive display 104 is attached to the mounting surface 150 of the display mount 126 (e.g., by adhesive or other appropriate fastening techniques). The protective cover 106 is attached to front surface of the display 104 to protect the display 104 from impacts and other damage. The protective cover 106 is transparent so as to not impair the display function of the touch-sensitive display 104. In some embodiments, the protective cover 106 is omitted. In other embodiments, the protective cover is an integral component of the display 104.

As shown in FIG. 8A, in the illustrated embodiment, the housing 102 is a single integrally formed component that includes both the base 124 and the display mount 126. Forming the housing 102 as a single integral component helps the thermostat 100 withstand the torque applied about the connecting point between the display mount 126 and the base 124 when a user pushes on the touch-sensitive display 104. The relatively large thickness 160 of the display mount 126 also helps withstand this torque.

The touch-sensitive display 104 may be a touchscreen or other type of electronic display configured to present information to a user in a visual format (e.g., as text, graphics, etc.) and receive input from a user (e.g., via a touch-sensitive panel). For example, the touch-sensitive display 104 may include a touch-sensitive panel layered on top of an electronic visual display. A user can provide inputs through simple or multi-touch gestures by touching the display 104 with one or more fingers and/or with a stylus or pen. The touch-sensitive display 104 can use any of a variety of touch-sensing technologies to receive user inputs, such as capacitive sensing (e.g., surface capacitance, projected capacitance, mutual capacitance, self-capacitance, etc.), resistive sensing, surface acoustic wave, infrared grid, infrared acrylic projection, optical imaging, dispersive signal technology, acoustic pulse recognition, or other touch-sensitive technologies known in the art. Many of these technologies allow for multi-touch responsiveness of display 104 allowing registration of touch in two or even more locations at once. The display may use any of a variety of display technologies such as light emitting diode (LED), organic light-emitting diode (OLED), liquid-crystal display (LCD), organic light-emitting transistor (OLET), surface-conduction electron-emitter display (SED), field emission display (FED), digital light processing (DLP), liquid crystal on silicon (LCoC), or any other display technologies known in the art. In some embodiments, the touch-sensitive display 104 is configured to present visual media (e.g., text, graphics, etc.) without requiring a backlight.

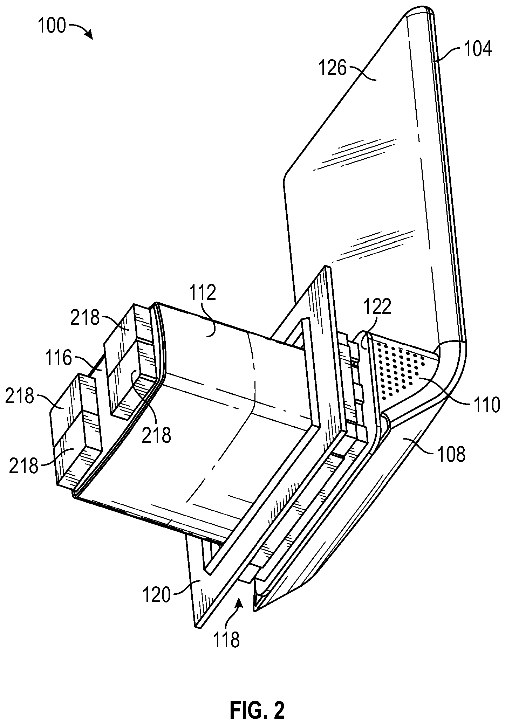

As shown in FIGS. 1 and 2, the touch-sensitive display 104, the protective cover 106, and the display mount 126 (collectively, the "display assembly") are not opaque, which allows the surface behind display assembly to be seen through the display assembly by a user operating or observing the thermostat 100. In embodiments omitting the protective cover 106 or in which a protective cover is an integral component of the touch-sensitive display 104, the "display assembly" consists of the touch-sensitive display 104 and the display mount 126. Not opaque means that at least some visible light is able to pass through the component and includes transparent and translucent components. For example, when the thermostat 100 is mounted on a wall, the wall is visible through the display assembly. This allows the thermostat to blend in to its surroundings when not in use (e.g. when no visual media is being displayed on the touch screen display). In the illustrated embodiment, the entire housing 102 is not opaque. In other embodiments, only the display mount 126 portion of the housing is not opaque. The housing 102 may be formed from a variety of materials (e.g., polymers including acrylics, metals, composite materials, laminates, etc.)

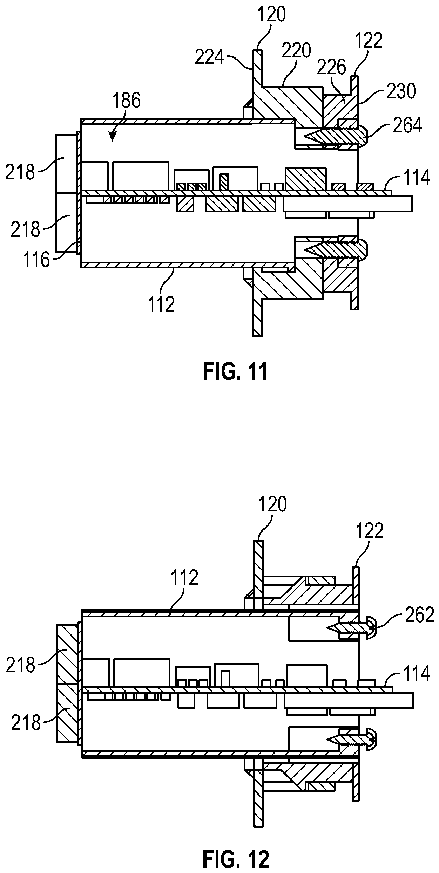

As shown in FIGS. 8 and 9-13, the housing 102 and the case 112 contain various electronic components, including one or more sensors, components configured to perform control functions (e.g., circuit boards, processing circuits, memory, a processor, etc.), components configured to facilitate communications (e.g., a WiFi transceiver, a cellular transceiver, a communications interface, etc.), and components configured to provide a visual display via the touch-sensitive display 104 (e.g., a video card or module, etc.). Various electronic components may also be contained within the case 112. As shown in FIG. 11, the circuit board 114 carries various electronic components and the circuit board 114 is positioned within the housing 102 and the case 112.

The sensors may include a temperature sensor, a humidity sensor, a motion or occupancy sensor (e.g., a passive infrared sensor), an air quality sensor (e.g., carbon monoxide, carbon dioxide, allergens, smoke, etc.), a proximity sensor (e.g., a thermopile to detect the presence of a human and/or NFC, RFID, Bluetooth, sensors to detect the presence of a mobile device, etc.), a camera, a microphone, a light sensor, a vibration sensor, or any other type of sensor configured to measure a variable state or condition of the environment in which the thermostat 100 is installed. In some embodiments, the proximity sensor is used to turn on the display 104 to present visual media when the user is close to the thermostat 100 and turn off the display 104 when the user is not close to the thermostat 100, leading to less power usage and longer display life. Some sensors such as a proximity sensor, a motion sensor, a camera, a light sensor, or an optical sensor may positioned within the housing 102 to monitor the space near the thermostat 100 through a sensor lens. The lens is not opaque and allows at least the frequencies of light necessary for the particular sensor to function to pass therethrough, allowing the sensor to "see" or "look" through the lens.

In other embodiments, one or more sensors may be located external to the housing 102 and may provide input to the thermostat 100 via a data communications link. For example, one or more sensors may be installed in a gang box behind the thermostat 100, installed in a separate gang box mounted within the same wall to which the thermostat 100 is mounted, or otherwise located throughout the room or space monitored or controlled by the thermostat 100 (e.g., in a wall, in a ceiling panel, in an open volume of the room or space, in a duct providing airflow to the room or space or receiving airflow from the room or space, etc.). This allows the thermostat 100 to monitor the input from a variety of sensors positioned at disparate locations. For example, a humidity sensor may be positioned in a wall and configured to measure the humidity within the wall (e.g., to detect water leakage or burst pipes).

As shown in FIGS. 8 and 9-13, the circuit board 114 may include one or more sensors (e.g., a temperature sensor, a humidity sensor, etc.), communications electronics, a processing circuit, and/or other electronics configured to facilitate the functions of the thermostat 100. As shown in FIG. 13, the circuit board 114 is oriented substantially perpendicular to the display mount 126 and the rear wall 136 of the base 124.

As shown in FIG. 3A, in some embodiments, the circuit board 114 functions at least in part as a sensor board and has one or more sensors, including a proximity sensor, a motion or occupancy sensor, and a temperature sensor 172. In some embodiments, the circuit board 114 functions at least in part as control board and includes processing electronics 174 and a power supply or battery 176. The processing electronics 174 are coupled (e.g., by a cable or wiring harness) to the touch-sensitive display 104 to receive user inputs from the display 104 and provide outputs to control the display 104 to control operation of the display 104. In some embodiments, the power supply 176 is rechargeable. In some embodiments, the power supply 176 can be replaced by the user. The processing electronics can include a processor and memory device. Processor can be implemented as a general purpose processor, an application specific integrated circuit (ASIC), one or more field programmable gate arrays (FPGAs), a group of processing components, or other suitable electronic processing components. Memory device (e.g., memory, memory unit, storage device, etc.) is one or more devices (e.g., RAM, ROM, Flash memory, hard disk storage, etc.) for storing data and/or computer code for completing or facilitating the various processes, layers and modules described in the present application. Memory device may be or include volatile memory or non-volatile memory. Memory device may include database components, object code components, script components, or any other type of information structure for supporting the various activities and information structures described in the present application. According to an exemplary embodiment, memory device is communicably connected to processor via processing circuit and includes computer code for executing (e.g., by processing circuit and/or processor) one or more processes described herein. In some embodiments, the electronic components are variously distributed among two or more circuit boards.

In some embodiments, the case 112 is formed as a sleeve having a substantially rectangular cross-section. As shown in FIG. 8B, the case 112 includes a top wall 178, a bottom wall 180, a first or left sidewall 182 and a second or right sidewall 184. The sidewalls 182 and 184 connect the top wall 178 and the bottom wall 180 to define an interior volume 186. The case 112 also has a front surface or face 188 that defines an opening or aperture 190 and a rear surface or face 192 that defines an opening or aperture 194. Mounting bosses 196, 198, 200, and 202 are formed at the front face 188 at the corners between the top wall 178 and the sidewall 182, the top wall 178 and the sidewall 184, the bottom wall 180 and the sidewall 182, and the bottom wall 180 and the sidewall 184, respectively. Mounting boss 204 is formed at the front face 188 on the top wall 178 between the sidewall 182 and the sidewall 184 (e.g., at the center of the top wall 178). Mounting boss 206 is formed at the front face 188 on the bottom wall 180 between the sidewall 182 and the sidewall 184 (e.g., at the center of the bottom wall 180). Each mounting boss 196, 198, 200, 202, 204, and 206 includes an opening or aperture 207, 208, 210, 212, 214, and 216, respectively, to receive a fastener. In some embodiments, the apertures and the fasteners are threaded to establish a threaded connection between the two. The case 112 extends for a length between the front face 188 and the rear face 192 sufficient to accommodate the circuit board 114.

The end wall 116 closes the opening 194 in the rear face 192. The end wall 116 includes wire terminals 218 each configured to receive a control wire from the HVAC system to be controlled by the thermostat 100. The wire terminals 218 are electrically coupled to the circuit board 114 to allow communication to and from the thermostat 100 and to provide power to the thermostat 100. The end wall 116 may be attached to the rear face 192 (e.g., by fasteners, by heat staking, or other appropriate fastening techniques) or may be formed as an integral component of the case 112.

The mounting bracket 118 attaches the housing 102 and the case 112 to a mounting location. Frequently, the mounting location is a wall though other mounting locations are possible. In some embodiments, as illustrated, the mounting bracket 118 includes two frames 120 and 122 configured to be attached to one another and to the case 112. The first or interior frame 120 includes a base or sleeve 220 that defines an interior opening or aperture 222 and a flange 224 extending outward from the sleeve 220. As shown in FIG. 13, the flange 224 is sized to contact an inner surface of the wall or other mounting location. The second or exterior frame 122 includes a base or sleeve 226 that defines an interior opening or aperture 228 and a flange 230 extending outward from the sleeve 226. As shown in FIG. 13, the flange 230 is sized to contact an outer surface of the wall or other mounting location. In use, the interior frame 120 is positioned within the wall so that that the flange 224 is in contact with the inner surface of the wall and the sleeve 220 extends toward the outer surface of the wall. The exterior frame 122 is attached to the interior frame 120 (e.g., by snap-fit connections or other appropriate fasteners) with the flange 230 in contact with the outer surface of the wall and the sleeve 226 extending toward the inner surface of the wall. As shown in FIG. 13, this results in the flanges 224 and 230 being spaced apart by a distance 232 corresponding to the thickness of the wall, thereby clamping the frames 120 and 122 to the wall and securing the mounting bracket 118 to the wall.

As shown in FIG. 13, the case 112 is attached to the housing 102 (e.g., by threaded fasteners or other appropriate fasteners). After connecting the control wires to the wire terminals 218, the thermostat body including the housing 102 and the case 112 is then attached to the mounting bracket 118. The case 112 is inserted through the apertures 228 and 222 of the exterior frame 122 and the interior frame 120 so that the case 112 extends into the wall or other mounting location. The flange 224 of the interior frame 120 is located between the front surface 188 and the rear surface 192 of the case 112. The flange 230 of the exterior frame 122 is located between the rear wall 136 of the base 124 of the housing 102 and the rear surface 192 of the case 112. The circuit board 114 located within the case 112 also extends into the wall.

Conventional thermostats are located entirely on the external side of a wall and all of their circuit boards and electronics are present on the external side of the wall. This can require a relatively wide device to accommodate these components. Locating at least a portion of the circuit board 114 within the wall enables the thermostat 100 to present a device having a relatively small width to the user. The relatively narrow thermostat 100 also can be mounted on surfaces with smaller available width of mounting location than those required by conventional thermostats (e.g., a narrow space between two adjacent doors).

The case 112 of the thermostat body is then attached to the mounting bracket 118 (e.g., by threaded fasteners or other appropriate fasteners). Alternatively, the housing 102 may be attached to the mounting bracket 118 (e.g., by threaded fasteners or other appropriate fasteners). In some embodiments, the exterior frame 122 may be omitted and the interior frame 120 is attached to the wall or other mounting location (e.g., by threaded fasteners, adhesive, or other appropriate fasteners).

As shown in FIG. 8A, an opening or aperture 233 is formed through the rear wall 136 of the housing 102. As shown in FIG. 3A, the opening 233 allows the circuit board 114 to extend from the interior volume 128 of the housing 102 to the interior volume 186 of the case 112. The rear wall 136 also includes four mounting apertures or openings 235, 237, 239, and 241 for receiving a fastener, each located near a corner of the rear wall 136. In some embodiments, the apertures and the fasteners are threaded to establish a threaded connection between the two. A cutout 243 is formed in the top of the opening 233 to accommodate a fastener head and a cutout 245 is formed in the bottom of the opening 233 to accommodate a fastener head as will be explained further below.

As shown in FIG. 8B, the exterior frame 122 includes two mounting bosses 234 and 236 that correspond with the mounting bosses 204 and 206 of the case 112. The mounting boss 234 is centrally located at the top of the sleeve 226 and extends downward into the opening 228 and the mounting boss 236 is located at the bottom of the sleeve 226 and extends upward into the opening 228. Each mounting boss 234 and 236 includes an opening or aperture 238 and 240, respectively, to receive a fastener. In some embodiments, the apertures and the fasteners are threaded to establish a threaded connection between the two.

The interior frame 120 also includes two mounting bosses 242 and 244 that correspond with the mounting bosses 234 and 236 of the exterior frame 122 and the mounting bosses 204 and 206 of the case 112. The mounting boss 242 is centrally located at the top of the sleeve 220 and extends downward into the opening 222 and the mounting boss 244 is located at the bottom of the sleeve 220 and extends upward into the opening 228. Each mounting boss 242 and 244 includes an opening or aperture 246 and 248, respectively, to receive a fastener. In some embodiments, the apertures and the fasteners are threaded to establish a threaded connection between the two.

The sleeve 226 of the exterior frame 122 includes two cutouts or openings 250 and 252 that correspond to the mounting bosses 242 and 244 of the interior frame 120 so that when the exterior frame 122 and the interior frame 120 are attached to another, the mounting bosses 242 and 244 of the interior frame 120 are placed in contact with the mounting bosses 234 and 236 of the exterior frame 122, respectively. The frames 120 and 122 are attached to one another by snap-fit connections. As shown in FIG. 8B, the frame 122 includes the projections 254 and 256 of the snap-fit connection extending from the sleeve 226 and the frame 120 includes the openings or receptacles 258 and 260 of the snap-fit connection formed through the sleeve 220. Each projection engages an opening to form a snap-fit connection. In other embodiments, the locations of the projections and the openings are reversed.

As shown in FIG. 8, the case 112 is attached to the housing 102 by four fasteners 262 that extend through the apertures 235, 237, 239, and 241 in the rear wall 136 of the housing 102 (FIG. 8A and FIG. 12) and into the apertures 207, 208, 210, and 212 of the mounting bosses 196, 198, 200, and 202 of the case 112 (FIG. 8B). The case 112 is attached to the mounting bracket 118 by two fasteners 264 that extend through the apertures 214 and 216 of the mounting bosses 204 and 206 of the case 112, through the apertures 238 and 240 of the mounting bosses 234 and 236 of the exterior frame 122, and through the apertures 246 and 248 of the mounting bosses 242 and 244 of the interior frame 120 (FIG. 11). The cutouts 243 and 245 in the rear wall 136 of the housing accommodate the heads of the fasteners 264 so that the fasteners may be inserted through the front of the housing 102 but do not contact the rear wall 136 of the housing 102 and therefore the fasteners 264 are not secured to the housing 102.

As shown in FIG. 8B, the case 112 may include a top cutout or opening 266 and a bottom cutout or opening 268. The top cutout 266 allows the mounting boss 234 of the exterior frame 122 and the mounting boss 242 of the interior frame 120 to slide through the case 112 so that the mounting boss 234 can contact the mounting boss 204 of the case 112. The bottom cutout 268 allows the mounting boss 236 of the exterior frame 122 and the mounting boss 244 of the interior frame 120 to slide through the case 112 so that the mounting boss 236 can contact the mounting boss 206 of the case 112. Covers 270 and 272 may be provided to cover the cutouts 266 and 268, respectively, after the case 112 is slid into the frames 122 and 120. The covers 270 and 272 may be attached to the case 112 and biased to a closed position so as to automatically close behind the frames 122 and 120. For example, each cover 270 and 272 may be attached to the case 112 by a hinge along the length of the cover and biased by a spring to the closed position. Alternatively, the covers 270 and 272 may include actuator levers accessible through the opening 190 in the case 112 to allow a user to manually open and close the covers 270.

As shown in FIGS. 3A and 8, the front cover 108 covers the front end 138 of the base 124 of the housing 102. The front cover 108 may be formed from a variety of materials (e.g., polymers including acrylics, metals, composite materials, laminates, etc.). In the illustrated embodiment, the front cover 108 is removably attached to the housing 102 (e.g., by magnets, by a snap-fit connection, by screws or other mechanical fasteners). Removably attaching the front cover 108 allows the end-user to customize the appearance of the thermostat 100 by allowing him to select amongst front covers made of different materials or having different color or finishes. In some embodiments, the front cover 108 is attached to the housing 102 by a hinge. A sensor lens may be provided in the front cover.

As shown in FIG. 8, the top cover 110 is removably attached to the housing 102. The top cover 110 covers a portion of the top wall 134 of the base 124 and portions of the two side walls 130 and 132 of the base 124. The top cover 110 includes multiple apertures or openings 274 that allow increased air flow to the housing 102, which may aid in cooling the electronic components located within the housing 102. In the illustrated embodiment, the apertures 274 are a series of relatively small circular perforations. In other embodiments, the apertures 274 may be larger, different shapes, and/or formed as slots or louvers. The top cover 110 may be formed from a variety of materials (e.g., polymers including acrylics, metals, composite materials, laminates, etc.). In the illustrated embodiment, the top cover 110 is removably attached to the housing 102 (e.g., by magnets, by a snap-fit connection, by screws or other mechanical fasteners). Removably attaching the top cover 110 allows the end-user to customize the appearance of the thermostat 100 by allowing him to select amongst top covers made of different materials or having different color or finishes. In some embodiments, the top cover 110 is attached to the housing 102 by a hinge. In some embodiments, the top cover 110 is omitted from the thermostat 100.

As shown in FIG. 13, the thermostat 100 is attached to a wall. The display assembly (e.g., the touch-sensitive display 104, the protective cover 106, and the display mount 126) are not opaque, which allows a user or observer to see the wall through the display assembly. When no visual media is being displayed on the touch-sensitive display 104, the display assembly may blend in to its surroundings, reducing its visual impact on the wall and the space surrounding the wall. For example, an observer sees the color of a painted wall through the display assembly with only the opaque components of the thermostat 100 (e.g., the front cover 108 and the top cover 110) obscuring or covering the observer's view of the wall. This has less of a visual impact in terms of opaque components covering the wall, than a conventional thermostat where the entirety of the thermostat is opaque. The visual impact can further be reduced by matching the color of the front cover 108 and the top cover 110 to the color of the wall.

As shown in FIG. 13, the display assembly is spaced apart from the wall with the back surface 162 of the display mount 126 spaced apart from the wall by a horizontal distance or gap 276. In conventional thermostats there is no gap between the display assembly and the wall like the gap 276 which is filled with the ambient atmosphere found near the thermostat 100.

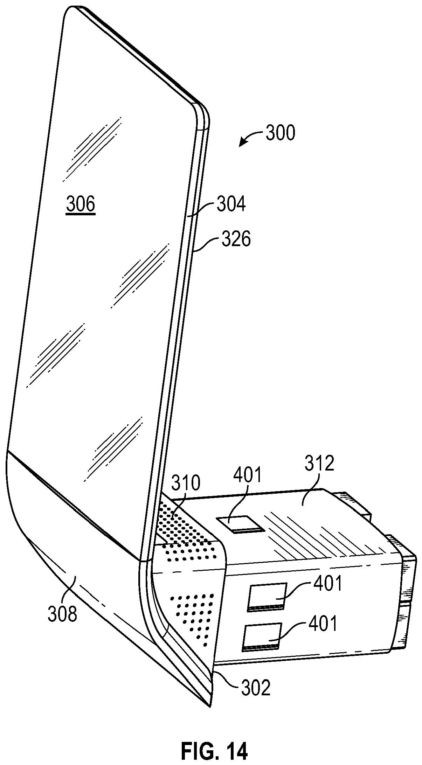

Figures 14-16 illustrate a multi-function user control device or thermostat 300, according to an exemplary embodiment. The thermostat 300 is substantially similar to the thermostat 300. Components similar to those of the thermostat 100 are numbered in the 300 and 400s instead of the 100 and 200s.

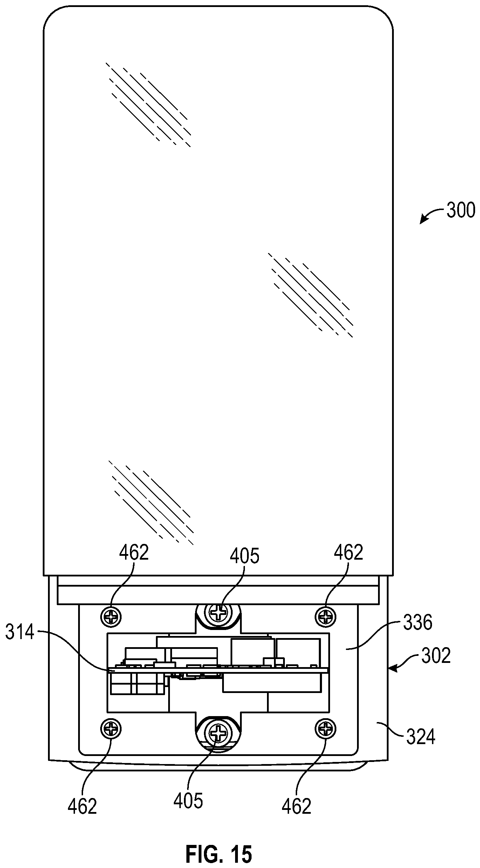

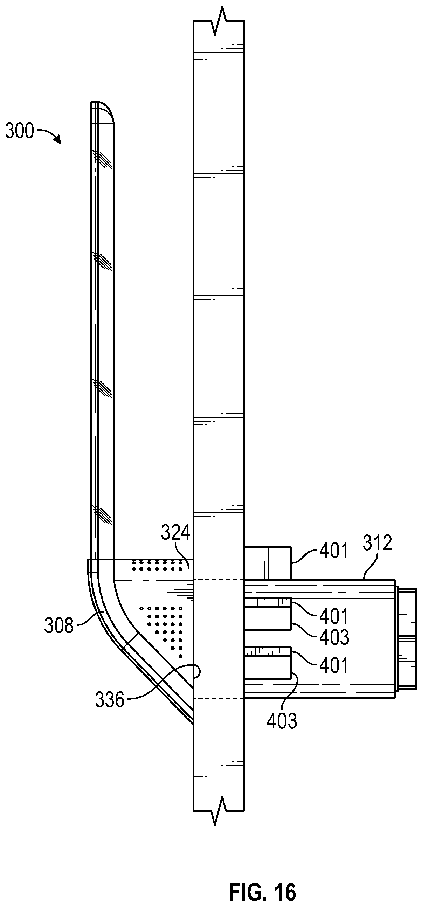

The thermostat 300 omits the mounting bracket 118 and instead uses a different mounting arrangement to attach the thermostat 300 to a wall or other mounting location. The case 312 is attached to the housing 302. As shown in FIG. 15, fasteners 462 attach the case 312 to the rear wall 336 of the base 324 of the housing. As shown in FIGS. 14 and 16, one or more mounting tabs or flags 401 are pivotably coupled to the case 312. The tabs 401 are pivotable between a closed or retracted position as shown in FIG. 14 and an open or extended position as shown in FIG. 16. In the retracted position, each tab 401 is positioned within a corresponding aperture or opening 403 in the case 312 so that the tabs 401 are substantially flush with the outer surface of the case 312. This enables the case 312 to be inserted into an aperture or opening in the wall to which the thermostat 300 is to be attached. In the extended or opened position, the tabs 401 are pivoted so that they extend outward from the case 312. As illustrated in FIG. 16, each tab 401 is substantially perpendicular to the adjacent outer surface of the case 312. The extended tabs 401 contact an inner surface of the wall and the rear wall 336 of the housing 302 contacts an outer surface of the wall to attach the thermostat 300 to the wall. Like in the thermostat 100, at least a portion of the case 312 and the circuit board 314 positioned within the case are located within the wall.

As shown in FIG. 15, each tab 401 is pivotably coupled to the case 312 by an axle 405 that is accessible to a user through the housing 302 with the front cover 308 removed. Each axle 405 includes a head that the user can manipulate to pivot the attached tab 401 between the retracted and extended positions. As illustrated the axles have a Phillips head, though other types of heads may be used in other embodiments. The axles 405 and the fasteners 462 used to attach the case 312 to the housing 302 may be the same component or separate axles and fasteners 462 may be provided.

The construction and arrangement of the systems and methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements may be reversed or otherwise varied and the nature or number of discrete elements or positions may be altered or varied. Accordingly, all such modifications are intended to be included within the scope of the present disclosure. The order or sequence of any process or method steps may be varied or re-sequenced according to alternative embodiments. Other substitutions, modifications, changes, and omissions may be made in the design, operating conditions and arrangement of the exemplary embodiments without departing from the scope of the present disclosure. References herein to the positions of elements (e.g., "top," "bottom," "above," "below," "upward," "downward," etc.) are used to describe the orientation of various elements relative to one another with the user control device in its normal operating position as illustrated in the drawings.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures show a specific order of method steps, the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps.

## Claims

1. A thermostat (100), comprising:
- a housing (102), comprising:
- a base (124);
- a display mount (126), wherein the display mount (126) extends upwardly, sideways or downwardly in a cantilevered fashion from the base (124) so that the display mount (126) is located above, to one side of, or below the base (124) in a normal operating position of the thermostat (100); and
- a case (112) defining an interior volume (186) extending between a front surface and a rear surface;
- a touch-sensitive display (104) configured to display visual media and receive user inputs, wherein the touch-sensitive display (104) is attached to the display mount (126);
- processing electronics (174) on a circuit board (114) positioned at least partially within the interior volume (186) of the case (112), wherein the processing electronics (174) are configured to operate the touch-sensitive display (104); and
- a mounting bracket (118) configured to attach to a mounting location, wherein the mounting bracket (118) includes a first frame (120) defining a first aperture (222) and the case (112) extends through the first aperture (222) so that the first frame (120) is located between the front and rear surfaces of the case (112),
wherein the touch-sensitive display (104) and the display mount (126) are not opaque.

2. The thermostat (100) of claim 1,
wherein the mounting bracket (118) further includes a second frame (122) defining a second aperture (228) and the case (112) extends through the second aperture (228) so that the second frame (122) is located between the base (124) and the rear surface of the case (112).

3. The thermostat (100) of claim 2,
wherein the case (112) is attached to the base (124), the case (112) is attached to the first frame (120), the case (112) is attached to the second frame (122), and the first frame (120) is attached to the second frame (122).

4. The thermostat (100) of claim 3,
wherein the case (112) is attached to the base (124) by at least one threaded fastener, the case (112) is attached to the first frame (120) by at least one threaded fastener, the case (112) is attached to the second frame (122) by at least one threaded fastener, and the second frame (122) is attached to the first frame (120) by at least one snap-fit connection.

5. The thermostat (100) of one of claims 2 to 4,
wherein the first frame (120) includes a first flange (224) and the second frame (122) includes a second flange (230) spaced apart from the first flange (224) by a distance corresponding to the thickness of the mounting location.

6. The thermostat (100) of claim 5,
wherein the first flange (224) is configured to contact an inner surface of the mounting location.

7. The thermostat (100) of claim 5 or 6,
wherein the second flange (230) is configured to contact an outer surface of the mounting location.

8. The thermostat (100) of claim 1 or 2,
wherein the case (112) is attached to the base (124) and the case (112) is attached to the first frame (120).

9. The thermostat (100) of one of claims 1 to 8,
wherein the base (124) defines a base interior volume (128) and the circuit board (114) is positioned partially within the base interior volume (128).

10. The thermostat (100) of one of claims 1 to 9,
wherein the base (124) is not opaque.

11. The thermostat (100) of one of claims 1 to 10,
wherein the mounting bracket (118) is configured to attach the housing (102) to the mounting location.

12. A thermostat (300), comprising:
- a housing (302), comprising:
- a base (324);
- a display mount, wherein the display mount extends upwardly, sideways or downwardly in a cantilevered fashion from the base (324) so that the display mount is located above, to one side of, or below the base (324) in a normal operating position of the thermostat (300); and
- a case (312) defining an interior volume extending between a front surface and a rear surface;
- a touch-sensitive display configured to display visual media and receive user inputs, wherein the touch-sensitive display is attached to the display mount;
- processing electronics on a circuit board positioned at least partially within the interior volume of the case (312), wherein the processing electronics are configured to operate the touch-sensitive display; and
- a plurality of mounting tabs (401) pivotably coupled to the case (312), each mounting tab (401) movable between a retracted position and an extended position where the mounting tab (401) extends outward from the case (312);
wherein, with the mounting tabs (401) in the retracted position, the case (312) is configured to extend into an aperture in a mounting location, wherein, with the mounting tabs (401) in the extended position, the mounting tabs (401) are configured to contact an inner surface of the mounting location to attach the housing (302) to the mounting location,
and
wherein the touch-sensitive display (104) and the display mount (126) are not opaque.

## Patentansprüche

1. Thermostat (100), der Folgendes umfasst:
- ein Gehäuse (102), mit:
- einem Sockel (124);
- einer Anzeigenaufnahme (126), wobei sich die Anzeigenaufnahme (126) auf eine freitragende Weise vom Sockel (124) nach oben, seitwärts oder nach unten erstreckt, derart, dass die Anzeigenaufnahme (126) in einer Standardbetriebsposition des Thermostaten (100) über, auf einer Seite von oder unter dem Sockel (124) angeordnet ist; und
- einem Kasten (112), der ein Innenraumvolumen (186) definiert, das sich zwischen einer Stirnfläche und einer Rückfläche erstreckt;
- eine berührungsempfindliche Anzeige (104), die konfiguriert ist, visuelle Medien anzuzeigen und Benutzereingaben zu empfangen, wobei die berührungsempfindliche Anzeige (104) an der Anzeigenaufnahme (126) befestigt ist;
- Verarbeitungselektronik (174) auf einer Leiterplatte (114), die zumindest teilweise in dem Innenraumvolumen (186) des Kastens (112) angeordnet ist, wobei die Verarbeitungselektronik (174) konfiguriert ist, die berührungsempfindliche Anzeige (104) zu betreiben; und
- einen Montagewinkel (118), der konfiguriert ist, an einem Montageort zu befestigen, wobei der Montagewinkel (118) einen ersten Rahmen (120) enthält, der eine erste Öffnung (222) definiert, und der Kasten (112) sich durch die erste Öffnung (222) erstreckt, derart, dass der erste Rahmen (120) zwischen der Stirnfläche und der Rückfläche des Kastens (112) angeordnet ist,
wobei die berührungsempfindliche Anzeige (104) und die Anzeigenaufnahme (126) nicht undurchsichtig sind.

2. Thermostat (100) nach Anspruch 1,
wobei der Montagewinkel (118) ferner einen zweiten Rahmen (122) enthält, der eine zweite Öffnung (228) definiert, und der Kasten (112) sich durch die zweite Öffnung (228) erstreckt, derart, dass der zweite Rahmen (122) zwischen dem Sockel (124) und der Rückfläche des Kastens (112) angeordnet ist.

3. Thermostat (100) nach Anspruch 2,
wobei der Kasten (112) am Sockel (124) befestigt ist, der Kasten (112) am ersten Rahmen (120) befestigt ist, der Kasten (112) am zweiten Rahmen (122) befestigt ist und der erste Rahmen (120) am zweiten Rahmen (122) befestigt ist.

4. Thermostat (100) nach Anspruch 3,
wobei der Kasten (112) durch mindestens ein Gewindebefestigungselement am Sockel (124) befestigt ist, der Kasten (112) durch mindestens ein Gewindebefestigungselement am ersten Rahmen (120) befestigt ist, der Kasten (112) durch mindestens ein Gewindebefestigungselement am zweiten Rahmen (122) befestigt ist und der zweite Rahmen (122) durch mindestens eine Rastverbindung am ersten Rahmen (120) befestigt ist.

5. Thermostat (100) nach einem der Ansprüche 2 bis 4,
wobei der erste Rahmen (120) einen ersten Flansch (224) enthält und der zweite Rahmen (122) einen zweiten Flansch (230) enthält, der vom ersten Flansch (224) um einen Abstand, der der Dicke des Montageortes entspricht, beabstandet ist.

6. Thermostat (100) nach Anspruch 5,
wobei der erste Flansch (224) konfiguriert ist, sich mit einer Innenfläche des Montageortes in Kontakt zu befinden.

7. Thermostat (100) nach Anspruch 5 oder 6,
wobei der zweite Flansch (230) konfiguriert ist, sich mit einer Außenfläche des Montageortes in Kontakt zu befinden.

8. Thermostat (100) nach Anspruch 1 oder 2,
wobei der Kasten (112) am Sockel (124) befestigt ist und der Kasten (112) am ersten Rahmen (120) befestigt ist.

9. Thermostat (100) nach einem der Ansprüche 1 bis 8,
wobei der Sockel (124) ein Sockelinnenraumvolumen (128) definiert und die Leiterplatte (114) teilweise in dem Sockelinnenraumvolumen (128) angeordnet ist.

10. Thermostat (100) nach einem der Ansprüche 1 bis 9,
wobei der Sockel (124) nicht undurchsichtig ist.

11. Thermostat (100) nach einem der Ansprüche 1 bis 10,
wobei der Montagewinkel (118) konfiguriert ist, das Gehäuse (102) am Montageort zu befestigen.

12. Thermostat (300), der Folgendes umfasst:
- ein Gehäuse (302), das Folgendes umfasst:
- einen Sockel (324);
- eine Anzeigenaufnahme, wobei sich die Anzeigenaufnahme auf eine freitragende Weise vom Sockel (324) nach oben, seitwärts oder nach unten erstreckt, derart, dass die Anzeigenaufnahme in einer Standardbetriebsposition des Thermostaten (300) über, auf einer Seite von oder unter dem Sockel (324) angeordnet ist; und
- einen Kasten (312), der ein Innenraumvolumen definiert, das sich zwischen einer Stirnfläche und einer Rückfläche erstreckt;
- eine berührungsempfindliche Anzeige, die konfiguriert ist, visuelle Medien anzuzeigen und Benutzereingaben zu empfangen, wobei die berührungsempfindliche Anzeige an der Anzeigenaufnahme befestigt ist;
- Verarbeitungselektronik auf einer Leiterplatte, die zumindest teilweise in dem Innenraumvolumen des Kastens (312) angeordnet ist, wobei die Verarbeitungselektronik konfiguriert ist, die berührungsempfindliche Anzeige zu betreiben; und
- mehrere Montagelaschen (401), die mit dem Kasten (312) drehbar gekoppelt sind, wobei jede Montagelasche (401) zwischen einer eingeklappten Position und einer ausgeklappten Position, in der sich die Montagelasche (401) vom Kasten (312) nach außen erstreckt, beweglich ist;
wobei dann, wenn sich die Montagelaschen (401) in der eingeklappten Position befinden, der Kasten (312) konfiguriert ist, sich in eine Öffnung in einem Montageort zu erstrecken,
wobei dann, wenn sich die Montagelaschen (401) in der ausgeklappten Position befinden, die Montagelaschen (401) konfiguriert sind, sich mit einer Innenfläche des Montageortes in Kontakt zu befinden, um das Gehäuse (302) am Montageort zu befestigen, und
wobei die berührungsempfindliche Anzeige (104) und die Anzeigenaufnahme (126) nicht undurchsichtig sind.

## Revendications

1. Thermostat (100), comportant :
- un boîtier (102), comportant :
- une base (124) ;
- une monture (126) d'affichage, la monture (126) d'affichage s'étendant vers le haut, sur le côté ou vers le bas de façon autoporteuse à partir de la base (124) de telle sorte que la monture (126) d'affichage soit située au-dessus, sur un côté ou au-dessous de la base (124) dans une position normale de fonctionnement du thermostat (100) ; et
- un coffret (112) définissant un volume intérieur (186) s'étendant entre une surface avant et une surface arrière ;
- un affichage tactile (104) configuré pour afficher des média visuels et recevoir des entrées d'utilisateur, l'affichage tactile (104) étant fixé à la monture (126) d'affichage ;
- une électronique (174) de traitement sur une carte (114) à circuits positionnée au moins partiellement dans le volume intérieur (186) du coffret (112), l'électronique (174) de traitement étant configurée pour faire fonctionner l'affichage tactile (104) ; et
- un support (118) de montage configuré pour se fixer à un emplacement de montage, le support (118) de montage comprenant un premier encadrement (120) définissant une première ouverture (222) et le coffret (112) s'étendant à travers la première ouverture (222) de telle sorte que le premier encadrement (120) soit situé entre les surfaces avant et arrière du coffret (112),
l'affichage tactile (104) et la monture (126) d'affichage n'étant pas opaques.

2. Thermostat (100) selon la revendication 1,
le support (118) de montage comprenant en outre un second encadrement (122) définissant une seconde ouverture (228) et le coffret (112) s'étendant à travers la seconde ouverture (228) de telle sorte que le second encadrement (122) soit situé entre la base (124) et la surface arrière du coffret (112).

3. Thermostat (100) selon la revendication 2,
le coffret (112) étant fixé à la base (124), le coffret (112) étant fixé au premier encadrement (120), le coffret (112) étant fixé au second encadrement (122), et le premier encadrement (120) étant fixé au second encadrement (122).

4. Thermostat (100) selon la revendication 3,
le coffret (112) étant fixé à la base (124) par au moins un élément d'assemblage fileté, le coffret (112) étant fixé au premier encadrement (120) par au moins un élément d'assemblage fileté, le coffret (112) étant fixé au second encadrement (122) par au moins un élément d'assemblage fileté, et le second encadrement (122) étant fixé au premier encadrement (120) par au moins une liaison à encliquetage.

5. Thermostat (100) selon l'une des revendications 2 à 4,
le premier encadrement (120) comprenant une première bride (224) et le second encadrement (122) comprenant une seconde bride (230) espacée par rapport à la première bride (224) d'une distance correspondant à l'épaisseur de l'emplacement de montage.

6. Thermostat (100) selon la revendication 5,
la première bride (224) étant configurée pour être au contact d'une surface intérieure de l'emplacement de montage.

7. Thermostat (100) selon la revendication 5 ou 6,
la seconde bride (230) étant configurée pour être au contact d'une surface extérieure de l'emplacement de montage.

8. Thermostat (100) selon la revendication 1 ou 2,
le coffret (112) étant fixé à la base (124) et le coffret (112) étant fixé au premier encadrement (120).

9. Thermostat (100) selon l'une des revendications 1 à 8,
la base (124) définissant un volume intérieur (128) de base et la carte (114) à circuits étant positionné partiellement dans le volume intérieur (128) de base.

10. Thermostat (100) selon l'une des revendications 1 à 9,
la base (124) n'étant pas opaque.

11. Thermostat (100) selon l'une des revendications 1 à 10,
le support (118) de montage étant configuré pour fixer le boîtier (102) à l'emplacement de montage.

12. Thermostat (300), comportant :
- un boîtier (302), comportant :
- une base (324) ;
- une monture d'affichage, la monture d'affichage s'étendant vers le haut, sur le côté ou vers le bas de façon autoporteuse à partir de la base (324) de telle sorte que la monture d'affichage soit située au-dessus, sur un côté ou au-dessous de la base (324) dans une position normale de fonctionnement du thermostat (300) ; et
- un coffret (312) définissant un volume intérieur s'étendant entre une surface avant et une surface arrière ;
- un affichage tactile configuré pour afficher des média visuels et recevoir des entrées d'utilisateur, l'affichage tactile étant fixé à la monture d'affichage ;
- une électronique de traitement sur une carte à circuits positionnée au moins partiellement dans le volume intérieur du coffret (312), l'électronique de traitement étant configurée pour faire fonctionner l'affichage tactile ; et
- une pluralité de pattes (401) de montage couplées de manière pivotante au coffret (312), chaque patte (401) de montage pouvant être déplacée entre une position rétractée et une position déployée où la patte (401) de montage s'étend vers l'extérieur à partir du coffret (312) ;
le coffret (312) étant configuré, lorsque les pattes (401) de montage sont dans la position rétractée, pour s'étendre jusque dans une ouverture dans un emplacement de montage,
les pattes (401) de montage étant configurées, lorsque les pattes (401) de montage sont dans la position déployée, pour être au contact d'une surface intérieure de l'emplacement de montage afin de fixer le boîtier (302) à l'emplacement de montage, et
l'affichage tactile (104) et la monture (126) d'affichage n'étant pas opaques.
